# EUROPEAN PATENT APPLICATION

(11) **EP 4 830 526 A1**
(43) Date of publication of application: **28.10.2026**
(21) Application number: 26172203.7
(22) Date of filing: 14.04.2026
(51) Int. Cl.: A22C 21/00

(54) **POULTRY PROCESSING LINE AND METHOD TO REGISTER A PARAMETER PERTAINING TO A POULTRY OR POULTRY PARTS**

(30) Priority: 23.04.2025 NL 2040231
(71) Applicant: Meyn Food Processing Technology B.V., 1511 MA Oostzaan (NL)
(72) Inventor: PEDDEMORS, Allardus Klaas, 1511 MA Oostzaan (NL); KATTOUW, Robin Cornelis Maarten, 1511 MA Oostzaan (NL)
(74) Representative: van Breda, Jacobus

(57) **Abstract**

A poultry processing line (1) comprising at least one shackle (3) movable in the processing line, from which at least one shackle (3) poultry or poultry parts (4, 6) are suspendable by the legs (6), and said processing line (1) comprising at least one first sensor or detector (5) for registering a parameter pertaining to the poultry or poultry parts (4, 6) suspended from the at least one shackle (3), wherein the at least one first sensor (5) is provided with a field-of-view (A) at a location below the at least one shackle (3), which field-of-view (A) enables detection whether said at least one shackle (3) carries a single individual poultry leg (6) without connection to another poultry part, or detection whether said at least one shackle (3) carries two individual poultry legs (6) without connection to each other or to another poultry part.

## Description

The invention relates to a poultry processing line comprising at least one shackle movable in the processing line, from which at least one shackle poultry or poultry parts are suspendable by the legs, and said processing line comprising at least one first sensor or detector for registering a parameter pertaining to the poultry or poultry parts suspended from the at least one shackle, wherein the at least one first sensor or detector is provided with a field-of-view pointed at a location below the at least one shackle.

US 2007/111648 discloses such a processing line.

US 2025/052699 discloses a poultry processing line, wherein detached poultry legs are conveyed past a camera. The aim of this system is to determine a cutting path and distinguish between left and right poultry legs.

The applicant applies a poultry processing line with a sensor/detector for detecting whether the two poultry legs of a carcass are hanging from the same shackle. If the sensor/detector detects that the carcass is hanging from only one leg, it causes a bypass of the shackle or a rejection of said carcass.

In the present application, a poultry leg is defined as a drum part with its natural meat, or a drum connected to the thigh with their natural meat.

The invention is aimed at providing a solution for the following problem of the prior art poultry processing line. The sensor/detector of the known processing line cannot be used for detection of legs only (i.e. said legs without being attached to something else, such as another leg or another poultry part such as a front half or a carcass) that are being transported by the shackles. If a shackle" transports only a separate leg that is suspended therefrom, then in the prior art such separate leg will be discarded (which amounts to an avoidable loose of yield), since the known sensors/detectors cannot distinguish between a single leg without attachments, or a carcass/back half hanging from the shackle by only one leg.

It is therefore an object of the invention to make possible that the sensor/detector can distinguish between these two situations i.e. whether there is only a single leg or legs without further connections suspended from the shackle, or whether there is a full carcass/back half suspended by the leg or legs from the shackle. If for instance there is a full carcass/back half suspended from the shackle, it may be desirable to bypass a particular processing unit, particularly when such processing unit is only designed for processing individual legs without further connections, or vice versa to bypass the processing unit when this is designed for processing a full carcass/back half and the shackle supplies individual legs. Processing the wrong type of poultry part may otherwise cause damage to the processing unit.

To provide a solution to the above-mentioned problem the invention proposes a poultry processing line and a method of registering a parameter pertaining to the poultry or poultry parts that are being transported in the processing line, in accordance with the features of one or more of the appended claims.

In a first aspect of the invention wherein the at least one first sensor or detector (for instance a camera) of the processing line is provided with a field-of-view at a location below the at least one shackle, the at least one first sensor or detector is provided or connected with a decision making tool for analyzing images in the field-of-view of the sensor or detector to detect whether said at least one shackle carries a single individual poultry leg without connection to another poultry part, or to detect whether said at least one shackle carries two individual poultry legs without connection to each other or to another poultry part.

To achieve best results it is preferred that the field-of-view of the at least one first sensor or detector corresponds to a location below the at least one shackle wherein during use at said location a lower section of the poultry leg or poultry legs suspended from the shackle is positioned.

To promote effectiveness of the detection it is preferable that the decision making tool for analyzing images in the field-of-view of the at least one first sensor or detector is arranged to detect whether a predetermined area or areas of the field-of-view is or are free from any poultry part. By selecting such pre-determined areas, it may be detected whether there is one or two legs hanging from the concerning shackle and whether there is a further poultry part connected to the leg or legs.

A cost-effective solution avoiding expensive cameras can be provided when the first sensor or detector is a time-of-flight sensor. According to Wikipedia a time-of-flight camera, also known as time-of-flight sensor, is a range imaging camera system for measuring distances between the camera and a subject for each point of the image based on time-of-flight, the round trip time of an artificial light signal, as provided by a laser or an LED. However, other type of 3D sensors for measuring the distance using other techniques may also be used, such as the use of photoelectric sensors.

Further, although the distance may be calculated locally in the sensor itself, also some calibration data may be used, for the purpose of which the sensor can be arranged to provide the measured data over an interface, such as Ethernet.

It is beneficial that the processing line comprises at least a second sensor or detector for detecting when the at least one shackle is in a position along the processing line such that the leg or legs are in the field-of-view of the at least one first sensor or detector, and that the operation of the at least one first sensor is depending on the second sensor detecting that the leg or legs are in the field-of-view of the at least one first sensor. In this way the first sensor or detector does not have to constantly detect and only has to work when the shackle is in position. Further this promotes a high processing rate in the processing line without compromising accuracy. For the ease of implementation it is preferred that operation of the at least one first sensor or detector is dependent on receiving directly or indirectly a signal from the second sensor or detector indicating that the shackle has arrived at a position wherein the leg or legs suspended from the shackle are in the field-of-view of the at least one first sensor or detector.

It may be preferable that the at least one first sensor or detector is placed such that the field-of-view of the at least one first sensor or detector is arranged in a curved section of the processing line. When the shackles are conveyed along a curved section, the legs tend not to tilt and cross each other as in a straight section of the line. If the legs cross at the moment they are being scanned by the at least one first sensor or detector, the sensor or detector may give a false positive (the sensor or detector falsely detects that the two legs are connected by tissue). The most preferable situation is placing the detector in a curved section of the line between two sections, i.e. that the curved section connects a first straight section and a second straight section that are at an angle between each other in a range of 90° - 180°.

For realizing appropriate bypassing of the shackle with the suspended poultry or poultry parts to go around a processing unit in the processing line, it is desirable that the decision making tool connects to a controller which is arranged to provide a command signal to an actuator for diverting and/or bypassing the at least one shackle from its path away from the processing unit, or to continue the at least one shackle along its path towards the processing unit, depending on the at least one first sensor or detector output.

The invention is also embodied in a method to register a parameter pertaining to a poultry or poultry parts suspended from at least one shackle moving in a processing line, wherein at least one first sensor or detector is provided with a field-of-view at a location below the at least one shackle, with the characterizing feature that images in the field of view of the at least one sensor or detector are analyzed with a decision making tool to detect whether said at least one shackle carries a single individual poultry leg without connection to another poultry part, or detecting with said at least one sensor or detector whether said at least one shackle carries two individual poultry legs without connection to each other or to another poultry part.

Preferably the field-of-view of the at least one first sensor or detector is arranged so that it corresponds to a location below the at least one shackle wherein during movement of the at least one shackle in the processing line, a lower section of the poultry leg or poultry legs suspended from the shackle is positioned.

The method according to the invention is aimed at detecting whether two legs hang from the at least one shackle and then whether there is space between said two legs that is free from any other poultry part.

In a preferred embodiment of the method of the invention it is detected when the at least one shackle is in a position along the processing line such that the leg or legs are in the field-of-view of the at least one first sensor or detector.

Suitably operation of the at least one first sensor or detector is done only when the at least one shackle is in a position along the processing line such that the leg or legs are in the field-of-view of the at least one first sensor or detector.

Beneficially the field-of-view of the at least one first sensor or detector is oriented at a curved section of the processing line. Preferably the curved section is provided between a first straight section and a second straight section that are at an angle between each other in a range of 90° - 180°.

The method of the invention comprises providing a controller that uses the parameter to provide a command signal to an actuator for diverting and/or bypassing the at least one shackle from its path away from a processing unit, or to continue the at least one shackle along its path towards the processing unit, depending on the decision making tool output.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1 depicts a processing unit which is placeable in a processing line according to the invention,
- figure 2 depicts an area in the processing line of the invention where a shackle passes and detection takes place on the presence of one or more legs suspended from such shackle,
- figure 3 corresponds to figure 2, but shows now in addition that a back half is suspended from the shackle, and
- figure 4 also corresponds to figure 2, but shows now in addition that two separate legs without further connecting tissue are suspended from the shackle.

Whenever in the figures the same reference numerals are applied, these numerals refer to the same parts.

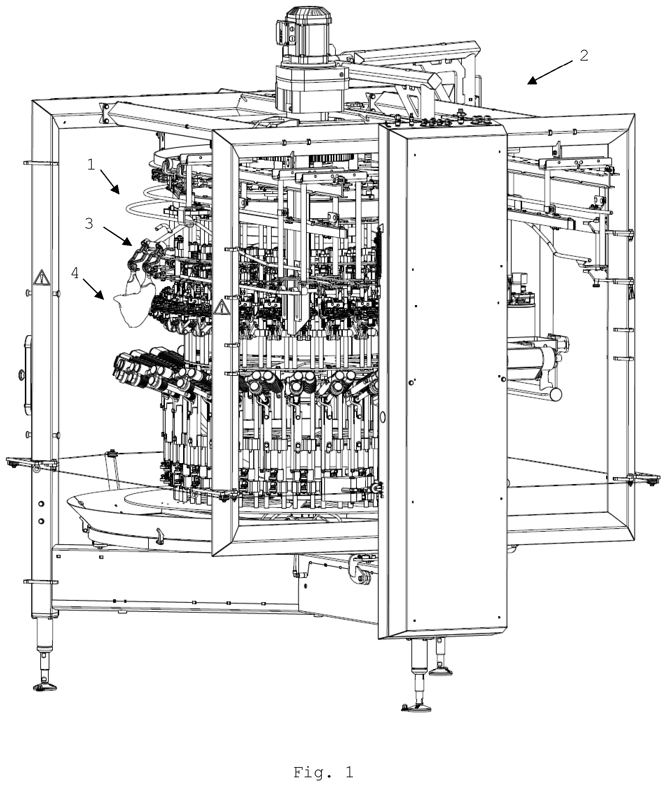

Figure 1 depicts a processing unit 2 which in known way is built along and together with a processing line 1. The processing unit 2 is designed for processing individual poultry legs, so that processing of a carcass/back half in the processing unit 2 must be avoided. Figure 1 shows indeed one shackle 3 of a series of shackles movable in the processing line 1, from which shackle 3 a back half 4 is suspended that is guided around the processing unit 2.

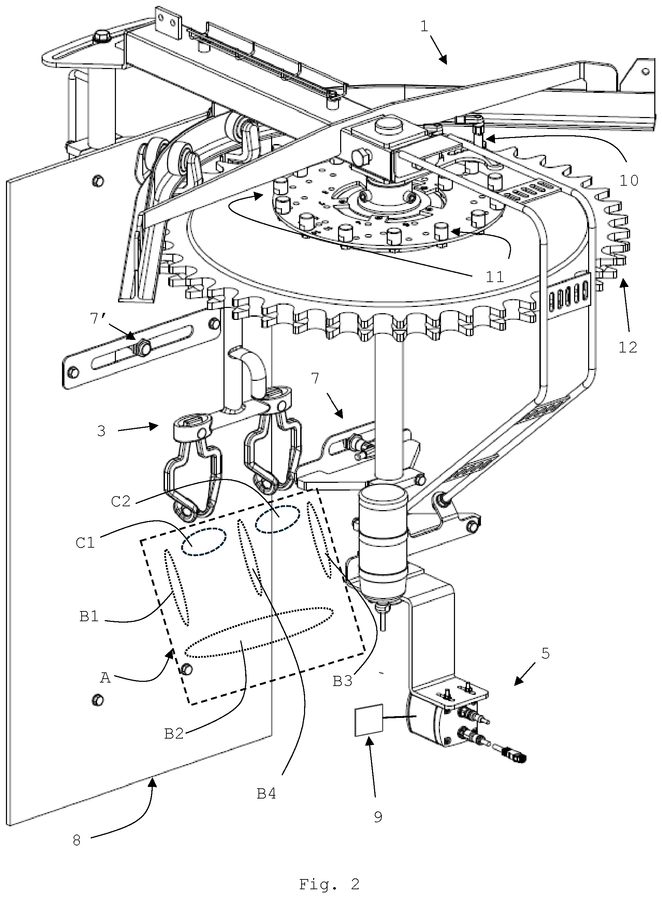

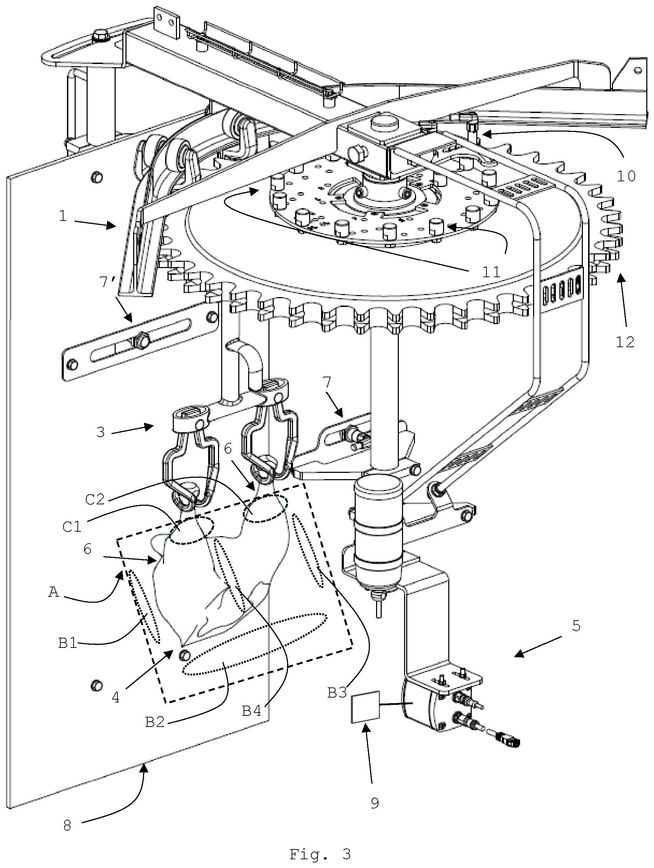

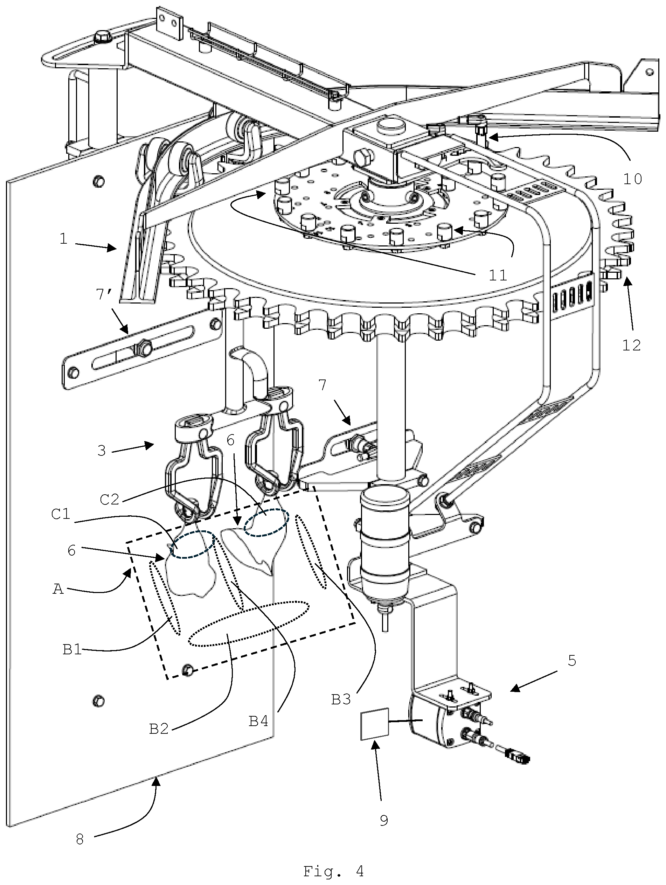

Usually at another location as depicted in figures 2, 3 and 4 said processing line 1 guides the series of shackles 3 towards at least one first sensor or detector 5 for registering a parameter pertaining to the poultry or poultry parts suspended from the at least one shackle 3. In figure 2 the shackle 3 is empty, but in figure 3 a back half 4 is suspended from the shackle 3, and in figure 4 two individual legs 6 are suspended from the shackle 3. The invention is aimed to distinguish between the situations depicted in figures 3 and 4 respectively.

According to the invention, the at least one first sensor or detector 5 is provided with a field-of-view A at a location below the at least one shackle 3, which field-of-view enables detection whether said at least one shackle 3 carries a single individual poultry leg 6 without connection to another poultry part, or detection whether said at least one shackle 3 carries two individual poultry legs 6 without connection to each other or to another poultry part. This latter situation is shown in figure 4.

The areas of interest in the field-of-view A are the areas C1 and C2 which are used to detect whether one leg or two legs are suspended from the shackle 3. The areas B1-B4 are used to determine whether there is any other poultry part suspended from the shackle 3 through its connection with the leg or legs suspended from the shackle 3. The areas B1 and B3 are in that sense a bit special because these areas should always be without poultry part, since the detected presence of a poultry part would indicate a collision with a poultry leg or legs suspended from a preceding or following shackle.

Correspondingly one will observe that the figures 2, 3 and 4 depict that the field-of-view A of the at least one first sensor or detector 5at least includes a location or locations B2, B4 below the at least one shackle 3 wherein during use at said location or locations a lower section of the poultry leg or poultry legs 6 suspended from the shackle 3 is positioned. Accordingly the at least one first sensor or detector 5 is preferably arranged to detect whether -as is shown in figure 3 and figure 4- two legs 6 hang from the at least one shackle 3 by detection of the areas C1 and C2, and then, whether there is a space free from any poultry part in the area B2, B4 between and below said two legs 6 - as is only the case in figure 4.

Out of cost considerations it is preferable that the first sensor or detector 5 is a time-of-flight sensor. The sensor or detector 5 may determine if in any of the above-mentioned areas there is a poultry part by comparing the distance registered with the distance to a reference board 8 being arranged behind the shackle. For example, when the distance registered is smaller than the distance to the board 8, the decision making tool 9 determines that there is a poultry part in the area. Further, although the sensor or detector 5 may calculate the distance locally in the sensor itself, also some calibration data may be used, for the purpose of which the sensor 5 can be arranged to provide the measured data over an interface, such as Ethernet.

Another possibility is the use of a photoelectric sensor having a light transmitter using for example UV light or any other suitable light, and a photoelectric receiver being arranged behind the shackle. When the photoelectric receiver does not receive the light from the light transmitter, then the decision making tool 9 determines that there is a poultry part present.

Figures 2, 3 and 4 also depict that the processing line 1 comprises at least a second sensor or detector 7 for detecting when the at least one shackle 3 is in a position along the processing line 1 such that the leg or legs 6 suspended from the shackle 3 will be in the field-of-view A of the at least one first sensor or detector 5. This enables that operation of the at least one first sensor or detector 5 can be made dependent on receiving directly or indirectly a signal from the second sensor or detector 5 that the first sensor or detector 5 has arrived at the location which is optimal for detecting the poultry part or parts suspended from the at least one shackle 3. In this way the first sensor or detector 5 does not have to constantly detect and only has to work when the shackle 3 is in position. This sensor 7 could be a laser photoelectric sensor working together with a reflector 7'. Other type of sensors are also possible, such as a trigger wheel sensor 10 being placed to detect knocks 11 being placed in a wheel 12 that corresponds to the area where the wheel 12 engages the shackle 3.

Figures 2, 3 and 4 depict the situation that the at least one first sensor or detector 5 is placed such that the field-of-view A of the at least one first sensor or detector 5 is arranged in a curved section of the processing line 1. When the shackles 3 are conveyed along a curved section, the legs 6 tend not to tilt and cross each other as in a straight section of the line, which would lead to a faulty detection of the legs being connected with another poultry part.

In a preferable arrangement the curved section connects a first straight section and a second straight section that are at an angle between each other in a range of 90° - 180°.

Although not further shown in the drawing of the figures, it is preferred that the at least one first sensor or detector 5 connects to a controller which is arranged to provide a command signal to an actuator for diverting and/or bypassing the at least one shackle 3 from its path away from the processing unit 2, as is shown in figure 1. Also the alternative is possible that the at least one shackle 3 continues along its path towards the processing unit 2, one thing and another depending on the output of the at least one first sensor or detector 5.

Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claim to this exemplary embodiment. The scope of protection of the invention shall therefore be construed in accordance with the appended claims only, wherein a possible ambiguity in the wording of the claims shall be resolved using this exemplary embodiment.

The invention is not limited to the embodiment/s illustrated in the drawings. Accordingly, it should be understood that where features mentioned in the appended claims are followed by reference signs, such signs are included solely for the purpose of enhancing the intelligibility of the claims and are in no way limiting on the scope of the claims.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. A poultry processing line (1) comprising at least one shackle (3) movable in the processing line, from which at least one shackle (3) poultry or poultry parts (4, 6) are suspendable by the legs (6), and said processing line (1) comprising at least one first sensor or detector (5) for registering a parameter pertaining to the poultry or poultry parts (4, 6) suspended from the at least one shackle (3), wherein the at least one first sensor or detector (5) is provided with a field-of-view (A) pointed at a location below the at least one shackle (3), **characterized in that** the at least one first sensor or detector (5) is provided or connected with a decision making tool (9) for analyzing images in the field-of-view (A) of the sensor or detector (5) to detect whether said at least one shackle (3) carries a single individual poultry leg (6) without connection to another poultry part, or to detect whether said at least one shackle (3) carries two individual poultry legs (6) without connection to each other or to another poultry part.

2. The poultry processing line according to claim 1, **characterized in that** the field-of-view (A) of the at least one first sensor or detector (5) corresponds to a location below the at least one shackle (3), wherein during use at said location a lower section of the poultry leg or poultry legs (6) suspended from the shackle (3) is positioned.

3. The poultry processing line according to claim 1 or 2, **characterized in that** the decision making tool (9) for analyzing images in the field-of-view (A) of the at least one first sensor or detector (5) is arranged to detect whether a predetermined area (B2, B4) of the field of view (A) is free from any poultry part.

4. The poultry processing line according to any one of the previous claims, **characterized in that** the first sensor or detector (5) is a time-of-flight sensor.

5. The poultry processing line according to any one of the previous claims, **characterized in that** the processing line (1) comprises at least a second sensor or detector (7) for detecting when the at least one shackle (3) is in a position along the processing line (1) such that the leg or legs (6) are in the field-of-view (A) of the at least one first sensor or detector (5), and that the operation of the at least one first sensor is depending on the second sensor detecting that the leg or legs are in the field-of-view of the at least one first sensor.

6. The poultry processing line according to claim 5, **characterized in that** operation of the at least one first sensor or detector (5) is dependent on receiving directly or indirectly a signal from the second sensor or detector (7).

7. The poultry processing line according to any one of claims 1-6, **characterized in that** the at least one first sensor or detector (3) is placed such that the field-of-view (A) of the at least one first sensor or detector is arranged in a curved section of the processing line (1).

8. The poultry processing line according to claim 7, **characterized in that** the curved section connects a first straight section and a second straight section that are at an angle between each other in a range of 90° - 180°.

9. The poultry processing line according to any one of claims 1 - 8, comprising a processing unit (2), **characterized in that** the decision making tool (9) connects to a controller which is arranged to provide a command signal to an actuator for diverting and/or bypassing the at least one shackle (3) from its path away from the processing unit (2), or to continue the at least one shackle (3) along its path towards the processing unit (2), depending on the at least one first sensor or detector (5) output.

10. A method to register a parameter pertaining to a poultry or poultry parts (4, 6) suspended from at least one shackle (3) moving in a processing line (1), comprising providing at least one first sensor or detector (5) with a field-of-view (A) at a location below the at least one shackle (3), **characterized in that** images in the field of view (A) of said at least one sensor or detector (5) are analyzed with a decision making tool (9) to detect whether said at least one shackle (3) carries a single individual poultry leg (6) without connection to another poultry part, or detecting with said at least one sensor or detector (5) whether said at least one shackle (3) carries two individual poultry legs (6) without connection to each other or to another poultry part.

11. The method according to claim 10, **characterized by** arranging the field-of-view (A) of the at least one first sensor or detector (5) so that it corresponds to a location below the at least one shackle (3), wherein during movement of the at least one shackle (3) in the processing line (1), a lower section of the poultry leg or poultry legs (6) suspended from the shackle (3) is positioned.

12. The method according to claim 11, **characterized by** detecting whether a predetermined area (B2, B4) of the field of view (A) is free from any poultry part.

13. The method according to any one of the previous claims 10 - 12, **characterized by** detecting when the at least one shackle (3) is in a position along the processing line (1) such that the leg or legs (6) are in the field-of-view (A) of the at least one first sensor or detector (5).

14. The method according to claim 13, **characterized by** operating the at least one first sensor or detector (5) only when the at least one shackle (3) is in a position along the processing line (1) such that the leg or legs (6) are in the field-of-view (A) of the at least one first sensor or detector (5).

15. The method according to any one of claims 10-14, **characterized by** providing the field-of-view (A) of the at least one first sensor or detector (5) in a curved section of the processing line (1).

16. The method according to claim 15, **characterized by** providing the curved section between a first straight section and a second straight section that are at an angle between each other in a range of 90° - 180°.

17. The method according to any one of claims 10 - 16, **characterized by** providing a controller that uses the parameter to provide a command signal to an actuator for diverting and/or bypassing the at least one shackle (3) from its path away from a processing unit (2), or to continue the at least one shackle (3) along its path towards the processing unit (2), depending on the decision making tool (9) output.
